# EUROPEAN PATENT APPLICATION

(11) **EP 1 135 986 A1**
(43) Date of publication of application: **26.09.2001**
(21) Application number: 01200866.0
(22) Date of filing: 08.03.2001
(51) Int. Cl.: A21C 5/00

(54) **Divider machine for soft leavened masses of bread dough**

(30) Priority: 21.03.2000 IT MI200170 U
(71) Applicant: Ars Pan s.r.l., 28040 marano Ticino (Novara) (IT)
(72) Inventor: Bertuetti, Gastone, 25123 Brescia (IT)
(74) Representative: Mittler, Enrico

(57) **Abstract**

Divider machine for soft leavened masses of bread dough comprising a hopper (1) for containing the mass of bread dough (2) which is provided with a lower delivery opening (3), a separation device (4) for a loaf of bread dough (11) which is associated with the hopper (1) below the delivery opening (3), and a collection device (5) for the loaf of bread dough separated from the mass of dough (2). A weighing device (10) for the loaf of bread dough (11) is associated with the collection device (5) and is connected with the separation device (4) for proportioning the loaf of bread dough (11) leaving the hopper (1).

## Description

The present invention refers to a divider machine for soft leavened masses of bread dough.

Divider machines for soft dough are generally known which have a hopper with lower closing blades which periodically open for the time necessary for a piece of bread dough to fall onto a collecting belt positioned below the hopper.

These machines can also be equipped with devices for separating the piece of bread dough or loaf of dough coming out of the hopper into single dosed portions, such as the machine described in the Italian patent No. 01254264. In said patent a conveyor belt placed in series with said collecting belt carries the loaf of bread dough towards a cutting station where by means of a cutting blade and a weight proportioning device, the loaf is subdivided into single portions.

Nevertheless in said divider machine the single loaf of dough coming out of the hopper is proportioned by filling a recipient consisting of the collecting belt and the sides of the hopper opening.

This way of proportioning the loaf of bread dough is rather rough as the dough sticks to the walls of the hopper causing the flow of the dough into the hopper to vary and therefore causing lack of uniformity in filling the recipient. This leads to the single loaves .of bread dough having considerably different weights which can thus influence the successive proportioning of the single portions of dough.

In view of the state of the technique described, the object of the present invention is to provide a divider machine for soft leavened masses of bread dough, which is equipped with a weighing device which eliminates the above mentioned inconvenience.

In accordance with the present invention, said object is reached through a divider machine for soft leavened masses of bread dough comprising a hopper for containing the mass of bread dough which is equipped with a lower delivery opening, a device for separating a loaf of bread dough which is associated to said hopper below said opening, and a device for collecting the loaf of bread dough separated from said mass of bread dough, characterized in that it comprises a device for weighing the loaf of bread dough which is associated to said collecting device and is connected to said separation device for proportioning the loaf of bread dough leaving said hopper.

Thanks to the present invention a divider machine can be constructed for soft leavened masses of bread dough which permits loaves of dough with basically the exact weight to be obtained.

The characteristics and advantages of the present invention will be evident from the following detailed description of an embodiment thereof, illustrated as non-limiting example in the enclosed drawings, in which:

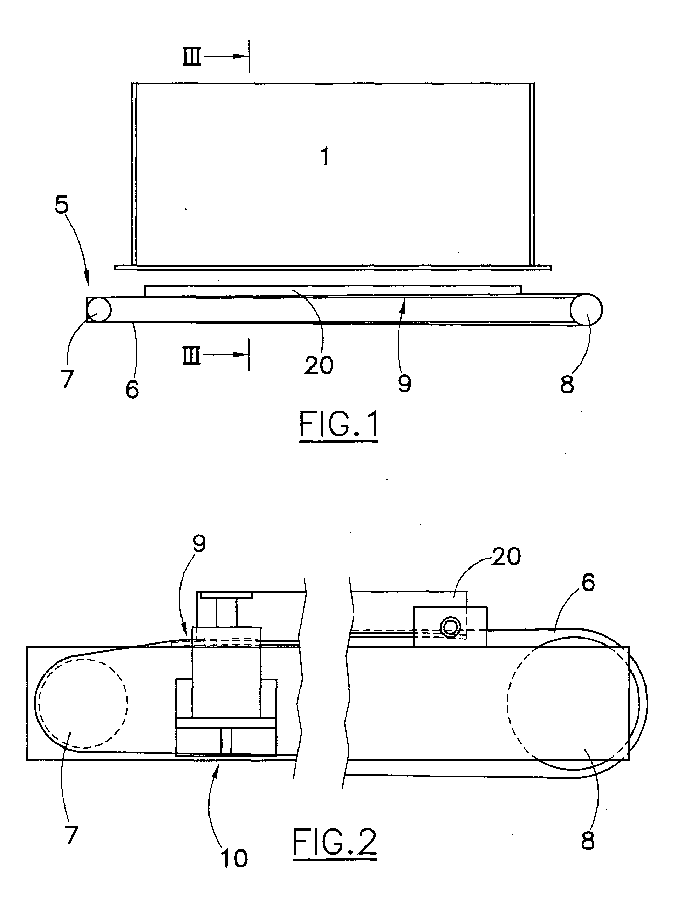

Figure 1 is a schematic side view of the divider machine in accordance with the present invention;
Figure 2 is a detailed side view of the weighing device of the machine in Figure 1.
Figure 3 is a transversal section of the machine in Figure 1 according to the line III-III;
Figure 4 is a transversal section of the machine in Figure 1 in a phase successive to that illustrated in Figure 3.

With reference to the attached Figures a divider machine in accordance with the present invention is shown. Said machine comprises a hopper 1 for containing a soft leavened mass of bread dough 2, which is provided with a lower delivery opening 3 opened and closed below by a blade 4 which is movable horizontally by means of an arm 40 operated by a cylinder 41.

Below the hopper 1 a conveyor 5 is positioned comprising a closed loop belt 6 on two rollers 7, 8, one of which can be driven by a motor; the purpose of said conveyor is to collect a loaf of bread dough 11 as it leaves the hopper.

Immediately below the upper part of the belt 6 of the conveyor 5 there is a metal plate 9 which extends approximately the entire length and width of the conveyor 5. The plate 9 has side edges 20 which rest on weighing devices 10 positioned on the sides of the plate 9.

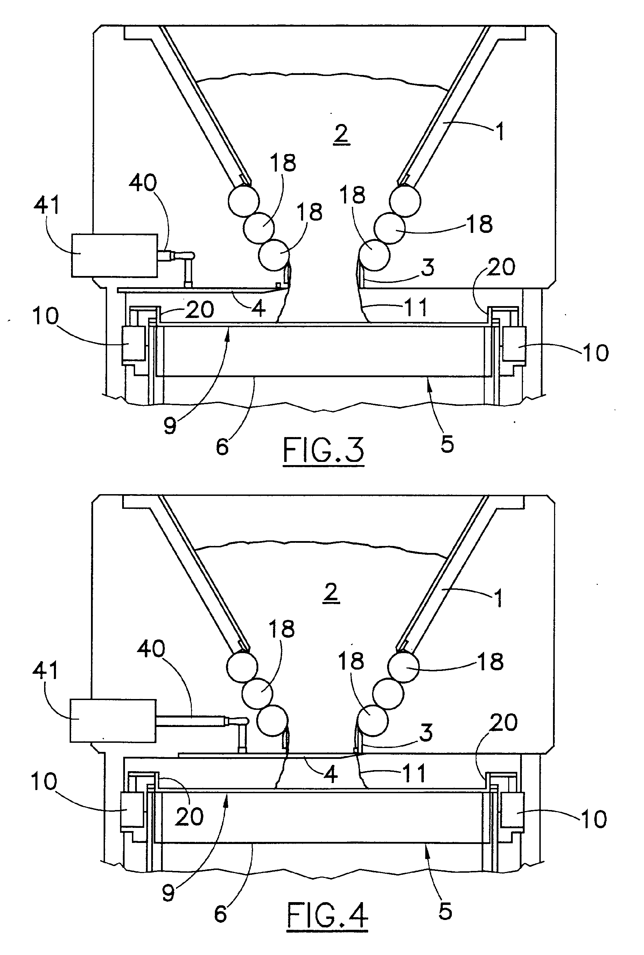

With blade 4 placed in hopper 1 opening position as illustrated in Figure 3, the bread dough 2 is pushed onto the belt 6 over the weighing plate 9 by feeding rollers 18. The quantity of dough 2 that lies on the belt 6 forms the loaf of bread dough 11 which is weighed by the weighing devices 10 connected to the plate 9 and when the preset quantity of dough has been reached the devices 10 emit a signal. Said signal stops the feeding rollers 18 and enables the cylinder 41 which, by means of the arm 40, moves the blade 4 towards the right, permitting hopper 1 to close, as illustrated in Figure 4. The conveyor is then started up to move the loaf of dough 11 onto another conveyor, aligned or underneath, which sends the loaf to a successive proportioning device.

By means of a following signal, cylinder 41 is activated in order to move blade 4 towards the left for the next opening of hopper 1.

## Claims

1. Divider machine for soft leavened masses of bread dough comprising a hopper (1) for containing the mass of bread dough (2) which is provided with a lower delivery opening (3), a separation device (4) for a loaf of bread dough (11) which is associated to said hopper (1) below said delivery opening (3), and a collecting device (5) for the loaf of bread dough separated from said mass of dough (2), **characterized in that** it comprises a weighing device (10) for the loaf of bread dough (11) which is associated to said collection device (5) and is connected to said separation device (4) for proportioning the loaf of bread dough (11) leaving said hopper (1).

2. Divider machine according to claim 1, **characterized in that** said collection device (5) is a conveyor formed of a belt (6) arranged like a closed loop on two rollers (7, 8) and having a part for the collection of the dough placed over a plate (9) on said weighing device (10).

3. Divider machine according to claim 1, **characterized in that** said separation device (4) is a blade which can be moved horizontally between an opening and a closing position of the bottom of the hopper (1) through a handling means (41).
